# FASCICULE DE BREVET EUROPEEN

(11) **EP 1 431 918 B1**
(45) Date de publication et mention de la délivrance du brevet: **16.11.2005**
(21) Numéro de dépôt: 03293062.0
(22) Date de dépôt: 08.12.2003
(51) Int. Cl.: G06T 7/20

(54) **Procédé de détection de virages sur une route et système de mise en oeuvre**
Verfahren und Vorrichtung zur Erkennung von Fahrbahnkurven
Method and system for detecting road bends

(30) Priorité: 20.12.2002 FR 0216431
(43) Date de publication de la demande: 23.06.2004
(73) Titulaire: VALEO VISION, 93012 Bobigny Cédex (FR)
(72) Inventeur: Milgram, Maurice, 75013 Paris (FR); Dumoncel, Didier, 78940 La Queue lez Yvelines (FR); Achard, Catherine, 95880 Enghien (FR); Ivaldi, William, 77140 Montcourt Fromonville (FR)
(74) Mandataire: Renous Chan, Véronique

(56) Documents cités:
- EP-A- 1 193 125
- DE-A- 10 127 034
- US-A- 5 301 115
- US-A1- 2002 080 618
- US-B1- 6 459 387
- DEL BIMBO A ET AL: "Dynamic neural estimation for autonomous vehicles driving" PATTERN RECOGNITION, 1992. VOL.II. CONFERENCE B: PATTERN RECOGNITION METHODOLOGY AND SYSTEMS, PROCEEDINGS., 11TH IAPR INTERNATIONAL CONFERENCE ON THE HAGUE, NETHERLANDS 30 AUG.-3 SEPT. 1992, LOS ALAMITOS, CA, USA,IEEE COMPUT. SOC, US, 30 août 1992 (1992-08-30), pages 350-354, XP010029960 ISBN: 0-8186-2915-0
- MASAKI I: "Three dimensional vision system for intelligent vehicles" INDUSTRIAL ELECTRONICS, CONTROL, AND INSTRUMENTATION, 1993. PROCEEDINGS OF THE IECON '93., INTERNATIONAL CONFERENCE ON MAUI, HI, USA 15-19 NOV. 1993, NEW YORK, NY, USA,IEEE, 15 novembre 1993 (1993-11-15), pages 1712-1717, XP010109279 ISBN: 0-7803-0891-3
- LIN L-J ET AL: "A robust landmark-based system for vehicle location using low-bandwidth vision" ROBOTICS AND AUTONOMOUS SYSTEMS, ELSEVIER SCIENCE PUBLISHERS, AMSTERDAM, NL, vol. 25, no. 1-2, 31 octobre 1998 (1998-10-31), pages 19-32, XP004142127 ISSN: 0921-8890

## Description

### Domaine de l'invention

L'invention concerne un procédé pour détecter, à partir d'un véhicule, les virages sur une route afin de préorienter l'éclairage de la route par les projecteurs du véhicule. L'invention concerne également un système de mise en oeuvre de ce procédé.

L'invention trouve des applications dans le domaine des véhicules circulant sur routes comme, par exemple, les véhicules automobiles ou les véhicules poids lourds. Elle trouve, en particulier, des applications dans le domaine de la projection de lumière par ces véhicules.

### Etat de la technique

Compte tenu du nombre important de véhicules circulant sur les routes, il est nécessaire de procurer, à ces véhicules, un éclairage le mieux adapté possible afin de réduire les risques d'accidents. En particulier la nuit, il est important que le conducteur puisse avoir une vision optimale de la route qui s'étend devant lui ainsi que des bas côtés de cette route. Autrement dit, pour des questions de sécurité, on cherche à améliorer l'éclairage de la route située devant le véhicule et, ainsi, à améliorer la vision de la scène de route par le conducteur du véhicule. Cette amélioration passe, notamment, par une anticipation de l'éclairage de la route.

Actuellement, sur la plupart des véhicules automobiles, les faisceaux d'éclairage du véhicule sont fixes. Ils éclairent donc à l'avant du véhicule. De ce fait, dans les virages, la partie utile de la route n'apparaît pas forcément dans le faisceau lumineux du véhicule. Pour résoudre ce problème, on cherche à orienter la lumière émise par les projecteur du véhicule en fonction de la géométrie de la route. Autrement dit, on cherche à ce que les projecteurs «suivent » la route, c'est-à-dire qu'ils éclairent droit devant le véhicule lorsque la route est rectiligne et qu'ils éclairent à l'avant du véhicule sur la droite ou sur la gauche lorsque la route forme un virage, respectivement, à droite ou à gauche.

Pour cela, une première technique consiste à envoyer de la lumière sur les cotés de la route, c'est-à-dire sur les bords de la route. Cela peut être réalisé au moyen de projecteurs fixes supplémentaires qui sont allumés uniquement lorsqu'on détecte un virage. L'intensité de l'éclairage est inversement proportionnelle au rayon du virage. Seul le projecteur supplémentaire intérieur au virage est allumé. La commande de l'éclairage provient du capteur d'angle volant.

Une autre technique consiste à rendre mobile le faisceau principal du projecteur grâce à un moteur qui tourne en fonction d'une information provenant du véhicule. Des dispositifs d'éclairage comportant de tels projecteurs mobiles sont connus. Ils permettent à l'éclairage de suivre la route. Généralement, ces dispositifs utilisent des informations disponibles sur le véhicule pour déterminer la géométrie de la route. Certains de ces dispositifs intègrent un capteur d'angle au volant qui fournit des informations sur la trajectoire suivie par le véhicule. Avec un tel dispositif, l'éclairage de la route n'est fonction que du comportement du conducteur. Par exemple, si le conducteur tourne le volant du véhicule vers la droite, alors les projecteurs du véhicule sont dirigés vers la droite de la route, en considérant qu'il s'agit d'un virage à droite. Si le conducteur ne bouge pas le volant, les projecteurs éclairent droit devant le véhicule. Par contre, si le conducteur donne malencontreusement une impulsion au volant, par exemple en se retournant un instant ou en sortant un objet de boîte à gants, l'orientation des projecteurs est modifiée alors que la géométrie de la route n'est pas modifiée. En outre, l'information relative au changement de direction est captée au moment même où le véhicule entre dans la courbe du virage. Elle est donc fournie au moteur du projecteur avec un instant de retard. En conséquence, le dispositif présente un retard sur le déclenchement de l'éclairage en virage, ce qui se traduit, pour le conducteur, par une sensation d'arrivée tardive du faisceau lumineux en entrée du virage et par un retour trop long du faisceau lumineux dans l'axe du véhicule en sortie du virage. Ce retard dans le changement d'orientation des projecteurs entraîne, non seulement, un manque de confort pour le conducteur mais aussi un manque de sécurité puisqu'il existe, à chaque changement d'orientation des projecteurs, un instant pendant lequel la route est insuffisamment éclairée. Un tel dispositif n'offre donc aucune possibilité d'anticipation pour le conducteur. Or, sur des routes où il y a de nombreux virages comme, par exemple, sur des routes de montagne avec des virages successifs, il est important de pouvoir anticiper afin que le conducteur connaisse, avec quelques mètres d'avance, la géométrie de la route.

Certains autres dispositifs d'éclairage connus utilisent des informations issues d'un système de navigation. Ce système de navigation associe les informations fournies par une cartographie avec les indications données par le GPS du véhicule. Un tel système de navigation permet de connaître à l'avance la géométrie de la route. Par exemple, il est possible de connaître à l'avance les virages qui vont apparaître sur la route à une distance donnée. Il est donc possible, en se fiant aux informations fournies par le système de navigation, de préorienter des faisceaux lumineux du véhicule et ainsi d'anticiper l'éclairage de la route. De tels dispositifs sont décrits notamment dans les documents EP 780823 et EP 887229. Cependant, la cartographie actuelle est encore très imprécise. Il arrive très souvent qu'à un endroit donné, l'information soit absente. En effet, il existe des zones entières du pays et du monde qui ne sont pas couvertes par les bases de données par la cartographie. Il arrive aussi que l'information fournie par le système de navigation soit aberrante. Par exemple, si le conducteur a prévu de se rendre à un lieu A qu'il a mémorisé dans son système de navigation et si, finalement, en cours de route il décide d'aller vers un lieu B et de ne pas suivre les indications données par le système de navigation, alors les informations données par ce système de navigation sont incohérentes, voir contradictoires, par rapport à la trajectoire réellement suivie par le véhicule. De plus, de tels dispositifs d'éclairage nécessitent des moyens lourds et relativement coûteux.

Il existe, par ailleurs, des dispositifs d'éclairage utilisant un système de repérage des lignes blanches situées sur les routes. Ce système utilise généralement une caméra qui prend des images de la scène de route se déroulant devant le véhicule. Le contraste des lignes blanches sur la route sombre permet de les détecter aisément et, en fonction de cette détection, d'orienter latéralement les faisceaux lumineux du véhicule. Cependant, il n'y a pas toujours des lignes blanches sur une route et ces lignes blanches, si elles existent, peuvent être effacées ou recouvertes par des dépôts quelconques, comme de la terre ; elles ne sont alors plus repérables par le système de repérage.

### Exposé de l'invention

L'invention a justement pour but de remédier aux inconvénients des techniques exposées précédemment. A cette fin, l'invention propose un procédé pour détecter avec anticipation les virages sur une route, en utilisant les contrastes qu'il peut y avoir entre la voie de circulation de la route, relativement sombre, et les bords de la route, plus lumineux. Ce procédé a l'avantage de pouvoir être mis en oeuvre sur n'importe quelle route, car toute route comporte une voie de circulation et des bas cotés, ou bords de route.

De façon plus précise, l'invention concerne un procédé de détection depuis un véhicule d'une variation de trajectoire, notamment d'un virage ou d'une ligne droite, sur une route comportant une voie de circulation et des bords de route, caractérisé en ce qu'il comporte les opérations suivantes :
- prise d'image d'une scène de route se déroulant devant le véhicule et au moins en partie éclairée par le véhicule,
- détermination, pour chaque pixel de l'image, d'un gradient de décroissance de la lumière,
- analyse de ces gradients de décroissance et détermination d'une image des bords de route,
- discrimination mathématique des gradients de décroissance à partir de l'image des bords de route,
- analyse de cette discrimination et détermination de l'angle du virage.

L'invention concerne également un système permettant de mettre en oeuvre le procédé précédent. Ce système comporte une caméra montée dans le véhicule, une unité de traitement d'images et un réseau neuronal.

### Brève description des figures

La figure 1 représente un exemple d'une image d'une route avec une voie de circulation et des bords de route.
La figure 2 représente l'image des bords de route obtenue après traitement de l'image de la figure 1.
La figure 3 représente des courbes des distributions mathématiques obtenues pour l'image de la figure 2.
Les figures 4A, 4B et 4C représentent les différentes étapes du procédé de l'invention, dans un premier exemple de virage.
Les figures 5A, 5B et 5C représentent les différentes étapes du procédé de l'invention, dans un exemple de route en ligne droite.
Les figures 6A, 6B et 6C représentent les différentes étapes du procédé de l'invention, dans un second exemple de virage.
La figure 7 représente schématiquement le système de l'invention.

### Description détaillée de modes de réalisation de l'invention

L'invention concerne un procédé pour détecter, depuis un véhicule, avec une anticipation de l'ordre de 30 mètres, un virage sur une route sur laquelle circule le véhicule. Ce procédé est basé sur le fait que toutes les routes sur lesquelles un véhicule peut circuler comportent une voie de circulation et des bords de routes, appelés aussi bas cotés. La voie de circulation est généralement sombre, du fait du bitume ou des autres matériaux qui la recouvre.Vus par la camera, les bords de route sont généralement plus clairs, plus lumineux que la voie de circulation, en raison de l'angle de renvoi de la lumière issue des projecteurs dans la direction de la camera. Les bords de route peuvent être de l'herbe, de la terre ou bien des trottoirs. L'herbe et la terre sont plus clairs que le revêtement de la voie de circulation. Les trottoirs peuvent être en pierre ou bien recouverts d'un matériau, généralement plus lumineux que le bitume de le voie de circulation. Dans certains cas, les trottoirs sont recouverts de bitume ; dans ce cas, ils comportent une bordure apparaissant plus claire et indiquant la limite entre le trottoir et la voie de circulation.

Le procédé de l'invention propose donc d'utiliser ce contraste entre les bords de routes et la voie de circulation pour déterminer la présence d'un virage. Il est basé sur le fait que, la voie de circulation étant sombre, la lumière émise par les faisceaux lumineux du véhicule sur la voie de circulation a tendance à décroître au fur et à mesure que l'on s'éloigne de la source de lumière. Autrement dit, plus on est loin du véhicule et plus la lumière sur la voie de circulation est faible. Au contraire, sur les bords de route plus lumineux, la lumière émise par le véhicule a tendance à être réfléchie. Autrement dit, la lumière ne décroît pas lorsqu'on s'éloigne du véhicule. Il y a ainsi une inversion de contraste entre la lumière sur la voie de circulation et la lumière sur les bords de route. Cette inversion de contraste est utilisée, dans un premier traitement, pour déterminer une image des bords de route. Cette image des bords de route est ensuite analysée pour déterminer s'il y a un virage et, si oui, s'il est orienté vers la gauche ou vers la droite du véhicule.

Le procédé de l'invention va maintenant être décrit plus en détail à l'aide de plusieurs exemples de routes sur lesquelles un véhicule peut se trouver.

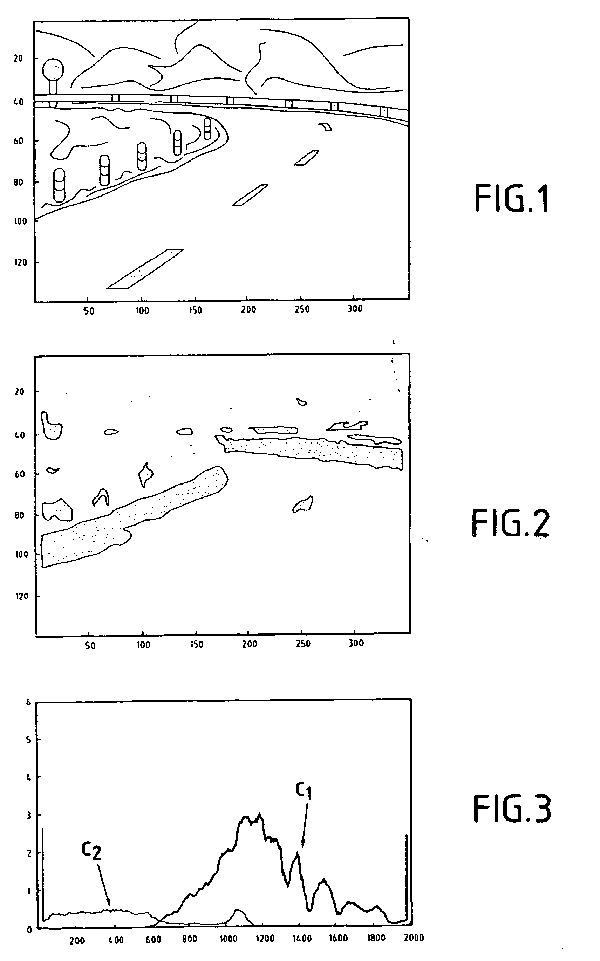

La figure 1 montre un premier exemple de route. Plus précisément, la figure 1 montre une image d'une scène de route prise par une caméra installée dans le véhicule. Cette image est une image naturelle de la route, c'est-à-dire une image non traitée de la scène de route se déroulant devant le véhicule. Cette image représente une route avec un virage sur la gauche. Cette route comporte une voie de circulation 1, un premier bord de route 2 situé sur la gauche du véhicule et un second bord de route 3 sur la droite et à l'avant du véhicule. On voit également sur cette image naturelle, une partie d'une ligne blanche pointillée 4, située au centre de la voie de circulation 1.

Le procédé de l'invention comporte un premier traitement de cette image naturelle qui consiste à déterminer, pour chaque surface élémentaire de cette image naturelle, le gradient de lumière. Pour cela, le procédé de l'invention propose d'analyser le niveau de lumière de chaque pixel (ou groupes de pixels) de l'image ainsi que le niveau de lumière du pixel (ou groupes de pixels) voisin du ou des pixels considéré(s). Ainsi, en considérant par exemple deux pixels voisins l'un de l'autre, on peut déterminer celui des deux pixels qui reçoit le plus de lumière et déterminer ainsi dans quel sens varie la lumière. On attribue alors à chaque pixel de l'image un vecteur d'évolution de la lumière ou gradient de lumière. Lorsque tous les vecteurs de tous les pixels de l'image naturelle ont été déterminés, on analyse ces vecteurs afin de déterminer une image des bords de route. Cette analyse consiste à chercher, parmi tous ces vecteurs, ceux qui sont orientés en direction du véhicule, c'est-à-dire en direction de la source d'émission du faisceau lumineux du véhicule et, au contraire, ceux qui sont orientés dans la direction inverse, c'est-à-dire vers l'extérieur de la route. On sélectionne ensuite les vecteurs correspondant à une valeur et avec une tolérance prédéterminées, cette valeur étant appelée vecteur seuil. Les vecteurs différents de ce vecteur seuil ne sont pas pris en considération pour la suite du traitement. Au contraire, les vecteurs correspondant à ce vecteur seuil sont conservés pour la suite du traitement.

Le vecteur seuil est prédéfini. Il peut être choisi comme une valeur de référence par rapport à l'horizontale. Il forme alors un angle de référence par rapport à l'horizontale.

Le vecteur de seuil peut aussi être choisi en fonction du pixel de plus fort gradient, c'est-à-dire du pixel dont le vecteur est le plus orienté vers le véhicule. Le vecteur seuil forme alors un angle de référence par rapport au pixel de plus fort gradient.

En d'autres termes, si l'on considère un premier et un second pixels situés côte à côte sur l'image naturelle de la figure 1, le vecteur du premier pixel forme avec le vecteur du second pixel un angle. Cet angle est comparé à l'angle de référence formé par le vecteur seuil. Par exemple, si le vecteur seuil forme un angle de 30° par rapport à l'horizontale, alors tous les pixels ayant un vecteur formant un angle différents de 30°, avec une tolérance choisie, ne sont pas pris en considération pour la suite du procédé.

Le procédé de l'invention consiste ensuite à construire une image des bords de route en utilisant les informations issues de l'analyse des gradients des pixels. Cette image des bords de route est déterminée en conservant l'information fournie par tous les pixels (ou groupes de pixels) dont le vecteur est comparable au vecteur seuil. Plus précisément, la valeur de ces pixels, c'est-à-dire leur niveau de gris, est reproduit à l'identique pour former une image traitée. Au contraire, tous les pixels dont le vecteur est différent du vecteur seuil ne sont pas reproduits. Ces pixels sont donc remplacés, sur l'image traitée, par des pixels noirs. L'image ainsi formée est l'image des bords de route.

Un exemple d'image des bords de route est représenté sur la figure 2. Cette image des bords de route de la figure 2 correspond à l'image de la figure 1 obtenue après traitement par inversion de contraste. Cette image montre des zones noires et des zones grises. En fait, seules les zones lumineuses de la figure 1 apparaissent sur cette figure 2, en contraste avec les zones noires correspondant aux parties sombres de l'image naturelle. En particulier, les zones lumineuses de l'image des bords de route correspondent au bord de route gauche 2 et au bord de route droit 3. L'une des zones lumineuses correspond à la ligne blanche pointillée 4, au milieu de la zone sombre qui correspond à la voie de circulation 1 de la route.

Il est avantageux d'éliminer les zones de l'image qui ne comportent pas d'informations pertinentes pour l'analyse de virages, en sélectionnant les vecteurs situés dans une fenêtre horizontale correspondant à une vision de la route comprise entre 30m et l'horizon approximativement.

Après obtention de l'image des bords de route, le procédé de l'invention comporte ensuite un second traitement. Ce traitement consiste à effectuer une discrimination mathématique des gradients de la lumière. Cette discrimination est réalisée à partir de l'image des bords de route, sur l'orientation des vecteurs. La figure 3 représente les courbes obtenues par une telle discrimination mathématique, pour l'exemple de route des figures 1 et 2.

Dans le procédé de l'invention, la discrimination mathématique consiste à calculer, pour chaque trame de l'image des bords de route, le nombre de pixels (ou groupes de pixels) dont le vecteur est orienté de la gauche vers le centre et celui dont le nombre de vecteurs est orienté de la droite vers le centre. Autrement dit, pour chaque colonne de pixels de l'image des bords de route, on calcule, d'une part, le nombre de pixels dont le vecteur est orienté de la gauche vers le centre de l'image et, d'autre part, le nombre de pixels dont le vecteur est orienté de la droite vers le centre de l'image. Cette discrimination mathématique est donc réalisée en fonction de l'orientation des vecteurs.

Sur la figure 3, la courbe C1 représentée par des points correspond au nombre de pixels (ou groupes de pixels) ayant un vecteur de décroissance orienté de la gauche de l'image vers le centre de l'image. La courbe C2 représentée par des croix montre le nombre de pixels (ou groupes de pixels) ayant un vecteur de décroissance orienté de la droite de l'image vers le centre de l'image.

En fonction de la répartition des pixels dans l'image des bords de route, on en déduit l'existence ou non d'un virage et son sens. Autrement dit, la forme de ces courbes C1 et C2 permet de déduire l'existence et l'orientation d'un virage sur une route. Il permet aussi de déduire l'angle de courbure.

Dans les exemples suivants, les figures 3, 4C, 5C, 6C présentent un axes d'abscisse inversé par rapport à celui des images 1, 2, 4A et 4B, 5A et 5B et 6A et 6B. Par exemple, sur la figure 3, on voit que le nombre de pixels lumineux est nettement plus important sur la droite de l'image. On en déduit que le bord de route gauche est plus visible sur l'image que le bord de route droit. On en déduit que la route présente un virage vers la gauche. Par ailleurs, on voit que la courbe C2 est inexistante sur la gauche de l'image et qu'elle présente un pic en milieu d'image ; la courbe C1 est relativement plate sur la gauche de l'image et inexistante à droite. De cette répartition statistique des pixels entre la courbe C1 et la courbe C2, on en déduit l'angle de courbure du virage.

Dans le procédé de l'invention, ces courbes de discrimination C1 et C2 sont analysées par un système neuronal, ou système de neurones, décrit ultérieurement.

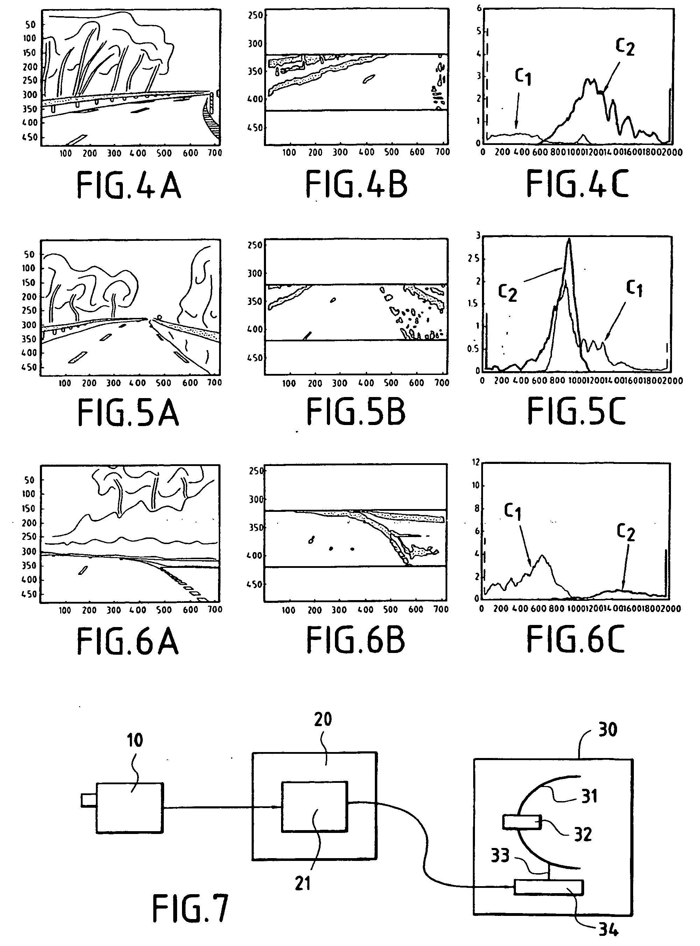

Sur les figures 4A, 4B et 4C, on a représenté les étapes principales du procédé de l'invention telles qu'elles viennent d'être décrites, pour un autre exemple de virage. En particulier, ces figures représentent, respectivement, une image naturelle d'une scène de route, image des bords de route obtenue après un premier traitement et les courbes de discrimination obtenues après un second traitement.

La figure 4A représente une image naturelle d'une route présentant un virage sur la droite. La figure 4B montre l'image des bords de route obtenue pour l'image de la figure 4A, après analyse de l'inversion de contraste.

Sur cette figure 4B, seule une fenêtre de traitement est montrée qui comporte la partie de l'image présentant l'information utile. Cette fenêtre de traitement correspond à un mode de réalisation du procédé de l'invention dans lequel on choisit de ne traiter que la partie centrale de l'image, c'est-à-dire la partie correspondant à la scène de route située entre la ligne d'horizon et une distance d'environ 30 mètres devant le véhicule. Dans un autre mode de réalisation de l'invention, on choisit de traiter la totalité de l'image de la scène de route.

La figure 4C montre les courbes C1 et C2 de discrimination obtenue à partir de l'image des bords de route. La répartition des pixels lumineux sur les courbes C1 et C2 montre que le bord de route gauche est le plus présent dans l'image. On en déduit que la route présente un virage vers la droite. La proportion des pixels ayant un vecteur orienté dans un sens ou dans l'autre permet de déterminer l'angle de courbure du virage.

De façon similaire aux figures 4A, 4B et 4C, les figures 5A, 5B et 5C ainsi que les figures 6A, 6B et 6C représentent, respectivement, l'image naturelle d'une scène de route, l'image des bords de route et les courbes de discrimination obtenues au cours du procédé de l'invention. Les figures 5A, 5B et 5C concernent un exemple de route droite. Les figures 6A, 6B et 6C concernent un exemple de virage à gauche.

La figure 5A montre une image naturelle d'une scène de route prise par la caméra. Cette scène de route est une route droite présentant une ligne blanche pointillée. La figure 5B montre l'image des bords de route de la figure 5A, dans une fenêtre de traitement. La figure 5C montre les courbes de discrimination mathématique C1 et C2 obtenue à partir de la figure 5B. Ces courbes C1 et C2 présentent une répartition des pixels lumineux sensiblement parallèle l'une à l'autre, sans proéminence d'un coté ou de l'autre de l'image. On en déduit qu'il s'agit d'une route droite, sans virage vers la droite ni vers la gauche.

La figure 6A montre une image naturelle d'une route présentant un virage « serré » vers la gauche. La figure 6B montre l'image des bords de route relative à la figure 6A, dans une fenêtre de traitement. La figure 6C montre les courbes de discrimination C1 et C2 obtenues à partir de l'image des bords de route de la figure 6B. La répartition des pixels lumineux sur les courbes C1 et C2 montre que la route présente un virage sur la gauche.

L'analyse des courbes des figures 3, 4C, 5C et 6C est réalisée par un réseau de neurones. Ce réseau de neurones est capable de déterminer, en fonction de la répartition des pixels lumineux dans l'image et de la silhouette des courbes C1 et C2, s'il y a un virage sur la route et dans quel sens est orienté ce virage. Il est également capable de déduire l'angle de courbure de ce virage.

Sur la figure 7, on a représenté schématiquement le système de mise en oeuvre du procédé de l'invention. Ce système comporte une caméra 10 montée dans le véhicule. Cette caméra peut être une caméra prévue initialement pour une autre fonction comme, par exemple, la vision de nuit. Ce peut être, par exemple, une caméra infrarouge.

Le système de l'invention comporte également une unité de traitement d'images 20 installée dans le véhicule. Cette unité de traitement d'images peut être, par exemple, intégrée dans un microprocesseur ou dans l'ordinateur de bord du véhicule. Elle peut aussi constituer une carte électronique dédiée Cette unité de traitement d'images 20 est connectée sur sortie de la caméra 10. Cette unité de traitement d'images effectue la construction de l'image des bords de route ainsi que la discrimination des pixels en deux courbes C1 et C2. Le système de l'invention comporte également un réseau de neurones 21. Ce réseau de neurones peut constituer une carte électronique dédiée ou bien un composant de type DSP inséré dans le circuit électronique du véhicule. Ce réseau neurone peut aussi être intégré dans l'unité de traitement d'images, comme montré sur la figure 7.

Qu'il soit ou non intégré dans l'unité de traitement d'images, le réseau de neurones est connecté au projecteur 30 du véhicule et, en particulier, au moteur assurant la mobilité du réflecteur du projecteur. Le réseau de neurones commande ainsi l'orientation latérale du projecteur du véhicule en fonction de l'angle de courbure du virage détecté. Il est bien entendu que le réseau de neurones peut commander simultanément l'orientation des deux projecteurs du véhicule. De cette façon, il est possible de préorienter l'éclairage de la route par les projecteurs du véhicule.

Le projecteur du véhicule est un projecteur mobile, orientable latéralement. Ce projecteur 30 comporte un réflecteur 31 sur lequel est montée une source lumineuse assurant l'émission d'un faisceau lumineux à l'avant du véhicule. Le réflecteur 31 est monté sur un support mobile 33 mis en rotation par un moteur 34. Ce projecteur 30 peut être un projecteur mobile du commerce. Il peut être également un projecteur fixe préorienté dont l'intensité varie en fonction de l'angle du virage, comme évoqué en début de description.

Le réseau neuronal utilisé dans le système de l'invention est de type classique. Il s'agit d'un réseau de neurones tel qu'on en trouve dans divers domaines de l'électronique et de l'informatique. Dans l'application de l'invention, c'est-à-dire l'application à la détection de virages sur une route, le réseau de neurones est capable, en fonction de la proportion des courbes C1 et C2 l'une par rapport à l'autre, de déterminer s'il y a un virage et dans quel sens est orienté ce virage. Il est aussi capable de déduire avec précision l'angle de courbure du virage. Cependant, comme tous les réseaux de neurones, ce réseau doit être initialisé c'est-à-dire qu'il doit apprendre au départ différentes géométries de virages ainsi que la corrélation de ces virages avec les courbes de discrimination. En d'autres termes, le réseau de neurones doit apprendre certaines géométries de virages avec la distribution de vecteurs qui lui correspond. Une fois que cet apprentissage est effectué, le réseau de neurones est autonome. Il va alors s'auto-apprendre à chaque nouveau virage détecté, c'est-à-dire qu'au fur et à mesure que le réseau de neurones analyse des cas différents, il apprend ces cas de façon à pouvoir déterminer plus rapidement et avec encore plus de précision la géométrie des virages qu'il va déterminer ultérieurement.

Le procédé de détection de virages qui vient d'être décrit a l'avantage de permettre de déterminer avec une relative précision l'angle de courbure du virage. Cette précision est de l'ordre de 2°. Il permet ainsi d'anticiper d'environ 30 mètres l'entrée ou la sortie d'un virage, avec une bonne précision.

Ce procédé présente aussi l'avantage d'être insensible aux autres éclairages, comme les éclairages des véhicules croisants ou l'éclairage urbain.

Le procédé de l'invention est prévu uniquement pour une orientation latérale des projecteurs du véhicule. Cependant, lorsque le châssis du véhicule n'est pas parfaitement parallèle à la route, c'est-à-dire lorsque l'assiette du véhicule n'est pas horizontale (cas d'un véhicule qui se penche en avant lorsqu'il freine ou qui penche à l'arrière à cause d'une charge mal repartie dans le véhicule), le procédé de l'invention peut être mis en oeuvre en déplaçant la fenêtre de traitement vers le haut ou vers le bas, de façon à ce que la partie de l'image traitée corresponde à la scène de route utile pour le traitement du signal. Cette modification peur s'opérer grâce à un signal issu du système de correction d'assiette.

Dans un mode de réalisation de l'invention, le système de l'invention peut choisir de ne pas tenir compte de l'information fournie par le réseau de neurones. Dans ce cas, on choisit un mode de commande dégradé qui consiste à prendre comme information celle fournie par le capteur au volant. Ce mode dégradé peut être choisi, par exemple, dans le cas où le véhicule se trouve sur une route très large, dans une très grande plaine plate, où il y a peu de relief et pas de bords de route détectable par la caméra. Il est à noter, toutefois, que de telles routes sont très rares dans nos régions.

Dans une variante de l'invention, le système comporte un flash qui peut être utilisé en sortie de virage de façon à éclairer pendant un très court instant la route, ce qui permet de savoir quel va être la géométrie de la route à plus de 30 mètres. Un tel flash peut être utile, par exemple, dans les zones à virages successifs comme les routes de montagne. Ce système permet alors une anticipation nettement supérieure à 30 mètres.

## Revendications

1. Procédé de détection depuis un véhicule des variations de trajectoire, notamment d'un virage ou d'une ligne droite sur une route comportant une voie de circulation (1) et des bords de route (2, 3), **caractérisé en ce qu'**il comporte les opérations suivantes :
- prise d'image d'une scène de route se déroulant devant le véhicule et au moins en partie éclairée par le véhicule,
- détermination, pour chaque partie élémentaire de l'image, d'un gradient de décroissance de la lumière,
- analyse de ces gradients de lumière et détermination d'une image des bords de route,
- discrimination mathématique des gradients à partir de l'image des bords de route,
- analyse de cette discrimination et détermination de l'angle du virage.

2. Procédé de détection d'un virage selon la revendication 1, **caractérisé en ce que** le gradient d'une partie élémentaire d'image correspond à un vecteur de décroissance de la lumière formé entre pixels voisins.

3. Procédé de détection d'un virage selon la revendication 2, **caractérisé en ce que** l'analyse des gradients de décroissance consiste en un seuillage des vecteurs de décroissance et une élimination des vecteurs de décroissance en dehors du seuil.

4. Procédé de détection d'un virage selon l'une quelconque des revendications 2 et 3, **caractérisé en ce que** la discrétisation mathématique consiste à comptabiliser les parties élémentaires d'image ayant un vecteur orienté dans un sens et les parties élémentaires d'image ayant un vecteur de décroissance orienté dans le sens inverse.

5. Procédé de détection d'un virage selon la revendication 4, **caractérisé en ce que** la comptabilisation des parties élémentaires d'image est réalisée colonne de pixels par colonne de pixels, ou par groupes de colonnes de pixels.

6. Procédé de détection d'un virage selon l'une quelconque des revendications 1 à 5, **caractérisé en ce que** l'analyse de la discrimination est réalisée par un réseau de neurones.

7. Procédé de détection d'un virage selon la revendication 6, **caractérisé en ce que** le réseau de neurones a préalablement appris des géométries de virages et des discriminations mathématiques correspondantes.

8. Système de détection d'un virage sur une route mettant en oeuvre le procédé selon l'une quelconque des revendications 1 à 7, **caractérisé en ce qu'**il comporte une caméra (10) montée dans le véhicule, une unité de traitement d'images (20) et un réseau de neurones (21).

9. Système de détection d'un virage selon la revendication 8, **caractérisé en ce que** le réseau de neurones est intégré dans l'unité de traitement d'images.

10. Système de détection de virage selon l'une quelconque des revendications 8 et 9, **caractérisé en ce qu'**il est connecté à un projecteur du véhicule, mobile (30) ou fixe et modulé en intensité.

## Patentansprüche

1. Verfahren zum Erkennen von Änderungen im Fahrbahnverlauf von einem Fahrzeug aus, insbesondere einer Kurve oder einer geraden Linie auf einer eine Fahrspur (1) und Fahrbahnränder (2, 3) umfassenden Fahrbahn,
**dadurch gekennzeichnet, dass** es folgende Schritte umfasst:
- Aufnehmen eines vor dem Fahrzeug liegenden und vom Fahrzeug wenigstens zum Teil beleuchteten Fahrbahnausschnitts,
- Bestimmen eines Lichtabnahmegradienten für jedes Einzelteil des Bildes,
- Analysieren dieser Lichtgradienten und Bestimmen eines Bildes der Fahrbahnränder,
- mathematisches Diskriminieren der Gradienten ausgehend von dem Bild der Fahrbahnränder,
- Analysieren dieser Diskriminierung und Bestimmen des Kurvenwinkels.

2. Verfahren zum Erkennen einer Kurve nach Anspruch 1,
**dadurch gekennzeichnet, dass** der Gradient eines Bildeinzelteils einem zwischen benachbarten Pixeln gebildeten Lichtabnahmevektor entspricht.

3. Verfahren zum Erkennen einer Kurve nach Anspruch 2,
**dadurch gekennzeichnet, dass** die Analyse der Abnahmegradienten aus einem Schwellenwertvergleich der Abnahmevektoren und einem Eliminieren der Abnahmevektoren außerhalb dieses Schwellenwerts besteht.

4. Verfahren zum Erkennen einer Kurve nach einem der Ansprüche 2 oder 3,
**dadurch gekennzeichnet, dass** die mathematische Diskretisierung darin besteht, die Bildeinzelteile mit einem in eine Richtung ausgerichteten Vektor und die Bildeinzelteile mit einem in entgegengesetzter Richtung ausgerichteten Abnahmevektor zu erfassen.

5. Verfahren zum Erkennen einer Kurve nach Anspruch 4,
**dadurch gekennzeichnet, dass** die Erfassung der Bildeinzelteile Pixelspalte für Pixelspalte oder in Gruppen von Pixelspalten erfolgt

6. Verfahren zum Erkennen einer Kurve nach einem der Ansprüche 1 bis 5,
**dadurch gekennzeichnet, dass** die Diskriminierungsanalyse durch ein neuronales Netz erfolgt.

7. Verfahren zum Erkennen einer Kurve nach Anspruch 6,
**dadurch gekennzeichnet, dass** das neuronale Netz zuvor die Kurvengeometrien und die entsprechenden mathematischen Diskriminierungen erlernt hat.

8. System zum Erkennen einer Kurve auf einer Fahrbahn, das das Verfahren nach einem der Ansprüche 1 bis 7 verwendet,
**dadurch gekennzeichnet, dass** es eine im Fahrzeug montierte Kamera (10), eine Bildverarbeitungseinheit (20) und ein neuronales Netz (21) umfasst.

9. System zum Erkennen einer Kurve nach Anspruch 8,
**dadurch gekennzeichnet, dass** das neuronale Netz in die Bildverarbeitungseinheit integriert ist.

10. System zur Kurvenerkennung nach einem der Ansprüche 8 oder 9,
**dadurch gekennzeichnet, dass** es an einen beweglichen oder feststehenden, helligkeitsmodulierten Fahrzeugscheinwerfer (30) angeschlossen ist.

## Claims

1. A method of detecting, from a vehicle, variations in the path ahead, especially a bend or a straight line on a road comprising a roadway (1) and verges (2, 3), **characterised in that** it includes the following operations:
- taking an image of a road scene evolving in front of the vehicle and at least partly illuminated by the vehicle,
- determining for each elementary portion of the image, a gradient of fading of the light,
- analysing the said light gradients and determining an image of the verges,
- performing mathematical discrimination of the gradients from the image of the verges, and
- analysing the said discrimination and determining the angle of the bend.

2. A method of detecting a bend according to Claim 1, **characterised in that** the gradient of an elementary image portion corresponds to a vector of fading of the light defined between two adjacent pixels.

3. A method of detecting a bend according to Claim 2, **characterised in that** the analysis of the gradients of fading comprises defining a threshold for the vectors of fading, and eliminating vectors of fading outside the threshold.

4. A method of detecting a bend according to Claim 2 or Claim 3, **characterised in that** the mathematical discrimination consists in counting the elementary image portions having a vector oriented in one direction and the elementary image portions having a vector of fading oriented in the opposite direction.

5. A method of detecting a bend according to Claim 4, **characterised in that** the counting of the elementary image portions is performed column of pixels by column of pixels, or by groups of columns of pixels.

6. A method of detecting a bend according to any one of Claims 1 to 5, **characterised in that** the analysis of the discrimination is performed by a network of neurones.

7. A method of detecting a bend according to Claim 6, **characterised in that** the network of neurones has been made aware beforehand of the geometries of bends and corresponding mathematical discriminations.

8. A system for detecting a bend on a road by means of the method according to any one of Claims 1 to 7, **characterised in that** it includes a camera (10) mounted in the vehicle, an image processing unit (20), and a neurone network (21).

9. A system for detecting a bend according to Claim 8, **characterised in that** the neurone network is integrated in the image processing unit.

10. A system for detecting a bend according to Claim 8 or Claim 9, **characterised in that** it is connected to a vehicle headlight, which is movable (30) or fixed and which is modulated in intensity.
